Europäisches Patentamt

European Patent Office

Office européen des brevets

(11) Publication number: **0 201 656**
**A1**

# (12) EUROPEAN PATENT APPLICATION

(21) Application number: 85830305.0

(22) Date of filing: 17.12.85

(51) Int. Cl.⁴: **A 47 J 31/24**

(30) Priority: 15.04.85 IT 2034285

(43) Date of publication of application:
20.11.86 Bulletin 86/47

(84) Designated Contracting States:
AT BE CH DE FR GB LI NL SE

(71) Applicant: Cigognini, Cesare
Via Neera 25/3
I-20100 Milano(IT)

(72) Inventor: Cigognini, Cesare
Via Neera 25/3
I-20100 Milano(IT)

(74) Representative: Cicogna, Franco
Ufficio Internazionale Brevetti Dott.Prof. Franco Cicogna
Via Visconti di Modrone, 14/A
I-20122 Milano(IT)

(54) An expresso coffee machine.

(57) An improved expresso coffee machine capable of producing coffee, capuccino and the like has water and steam delivery units (2, 3) separate from the main water heating boiler (4) to allow operation of the machine to make infusions and deliver hot water and/or steam with reduced energy consumption in times of infrequent or intermittent use. The main water heating boiler (4) is connected to the mains water supply (5) and provided with main heating means (10) and the two independent delivery units (2, 3) are each provided with independent water heating means (23, 24) for heating water drawn from a heat exchanger (20) immersed in the said boiler (4). The boiler's heating means (10) and the heating means (23, 24) of the said two delivery units can be actuated independently of one another, and hot water and/or steam can be withdrawn directly from the said boiler (4).

Fig. 1

Fig. 2

EP 0 201 656 A1

## AN EXPRESSO COFFEE MACHINE

The present invention relates to an expresso coffee machine for making coffee, capuccino, and the like, and particularly to such a machine having a reduced energy consumption in comparison with prior art such machines.

As is known, expresso coffee machines, in particular those for commercial use in bars, restaurants, cafes and other such public places, have a very high energy consumption in that the operation of the various water and coffee delivery units can only take place when a certain temperature level has been reached within the machine's boiler. This means that even in slack business periods it is necessary to maintain the boiler in full heating operation so that as a result steam is often emitted and a significant build up of calcareous deposits takes place within the boiler which, particularly in the case of the electrical resistance heater element in the boiler, leads to a reduction in the overall coefficient of thermal conduction and consequently a significant reduction in the efficiency and an increase in the energy consumption of the coffee machine.

The invention seeks to avoid the above mentioned disadvantages by providing an expresso coffee machine capable of producing coffee, capuccino and the like, having a reduced energy consumption.

- 2 -

According to the present invention, there is provided an expresso coffee machine having a reduced energy consumption, characterised in that it comprises a boiler connectable to a water supply and having main water heating means therein, two separate liquid delivery units selectively operable to deliver a coffee infusion, hot water or steam, each liquid delivery unit having a respective independent water heater and the boiler further having a heat exchanger connected to the said liquid delivery units and connectable to the water supply and means for controlling the heating means in the boiler and the independent heating means of the liquid delivery units independently of one another.

An advantage of the invention is that it provides a coffee machine which is extremely versatile and able to operate with very much shorter heating up periods than known such machines. Another advantage of the present invention is that it provides a coffee machine in which the main central boiler of the machine needs to be heated up only during busy periods whilst in normal or quiet periods of use it is possible to produce coffee using subsidiary heating means which are independent of the main boiler. It is to be noted that an expresso coffee machine formed as an embodiment of the invention not only has a reduced energy consumption in that, even if the central boiler is not in operation, it is still possible to produce infusions of coffee and the like, but also is able to produce coffee and the like without loss of quality.

Another advantage of the present invention is that in such an expresso coffee machine calcareous deposits are notably reduced with respect to those occuring in conventional machines, together with a significant energy saving which can be up to about 30 per cent.

- 3 -

One embodiment of the invention will now be more particularly described, by way of example, with reference to the accompanying drawings, in which:

Figure 1 schematically represents in three quarter perspective view the coffee machine according to the invention; and

Figure 2 is an electric diagram of the machine.

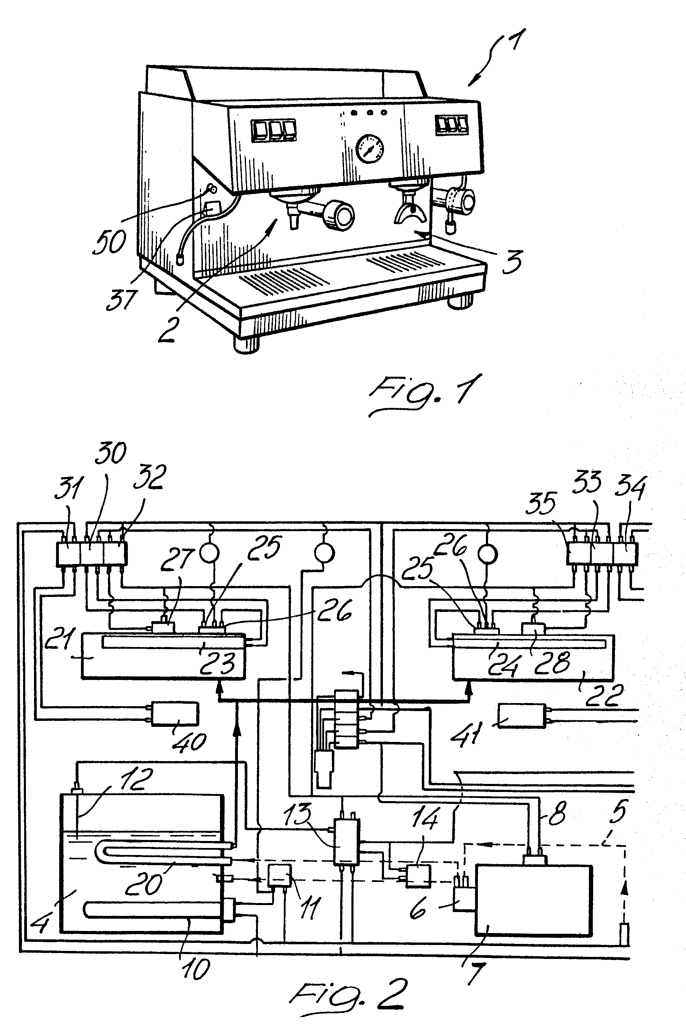

With reference now to the drawings, the expresso coffee machine shown for producing coffee, capuccino and the like is generally indicated with the reference numeral 1, and has, for example, two separate units, one for producing an infusion of coffee and the other for the delivery of water and steam. The two units are generally indicated with the reference numerals 2 and 3 respectively. Obviously the number of units of the machine can be greater than this depending on the requirements of the machine.

The machine includes a main boiler 4 which is connected to the mains or other water supply, indicated by the broken line 5, by means of a pump 6 driven by a motor 7 connected to an electrical supply network indicated 8. Within the boiler 4 there are provided heating means constituted by an electrical resistance immersion heater 10 which advantageously is controlled by a thermostat 11 in a known manner.

Within the boiler 4 there is a lvel sensor 12 which is connected to a central control unit 13 which controls the operation of a solenoid valve 14 to put the said pump 6 into operation when the water level falls below a certain threshold value, and to switch it off when it reaches an upper limit level. Within the boiler there is also provided a heat exchanger 20, which is also supplied by the pump 6, and this is connected to two auxiliary reservoirs 21 and 22 forming part of the first and second delivery units 2 and 3 respectively.

With this arrangement the auxiliary reservoirs 21 and 22 can be supplied with hot water if the boiler 4 is in operation, or by cold water if the boiler 4 is not functioning. In the auxiliary reservoirs 21 and 22 there are provided independent heating means respectively constituted by a first electrical resistance heater 23 and a second electrical resistance heater 24, each provided with a lower threshold thermostat 25 and an upper threshold thermostat 26. Each auxiliary reservoir has a respective solenoid valve, namely a first solenoid valve 27 and a second solenoid valve 28, which are inter-connected to the control switches of the individual delivery units. More precisely, the first delivery unit 2 has a switch 30 for controlling the energisation of the electrical resistance heater 23, a hot water delivery switch 31, and a switch 32 for controlling delivery of the infusion. Similarly, the second unit has a switch 33 for controlling the energisation of the electrical resistance heater 24, a steam delivery switch 33 and a switch 35 for controlling delivery of the infusion of coffee. Finally, a switch 37 is provided for controlling energisation of the electrical resistance 10 of the main boiler 4.

With the arrangement described above the individual delivery units have electrical heating means which are independent from the main heating means of the boiler 4 so that all the heating elements can be operated independently from one another according to the required delivery capacity which it is desired to obtain. For example, if operation of only the first unit 2 is desired, to obtain delivery of coffee, it is sufficient to press the switch 30 which switches on the heater element 23 and thereafter the switch 32 to obtain the coffee delivery. Such delivery takes place due to the operation of the pump which supplies water to the heat exchanger 20, which in turn supplies the auxiliary reservoir 21 and provides for the first solenoid valve 27 to be opened. The delivery of coffee takes place under the control of the thermostats 25 and 26, which respectively monitor the temperature of the water in a range between $90^O$ and $150^O$. If it is desired only to obtain delivery of hot water, it is sufficient to press the switch 30 and then the switch 31 to obtain delivery of hot water from the auxiliary reservoir.

The operation of the second unit is the same as that of the first unit which the single difference that steam delivery is obtained in place of the hot water delivery.

If the boiler switch 37 is actuated it is possible to obtain direct withdrawal of hot water and/or steam from the boiler 4 by pressing the boiler switch and then pressing the water or steam delivery switches of the individual units as appropriate; for this purpose there are provided delivery solenoid valves 40 and 41 which control the delivery of water from the boiler. When it is desired to draw coffee from the first unit it is sufficient to press the switch 30 for switching on the associated electrical resistance heater 23 and the switch 32 for delivery of coffee, independently of whether the main boiler 4 is on or not. Obviously, if the boiler 4 is switched on the water which is emitted from the auxiliary reservoir is preheated by its passage through the heat exchanger and, consequently, the operating times are reduced.

0201656

- 6 -

In addition, a push button 50 is provided, which allows the direct loading of water into the boiler in the case of failure of the automatic level sensor 12.

From what has been described it will be seen, therefore, that the invention provides an expresso coffee machine, the operating capacity of which is adjustable in dependence on requirements. In particular, the boiler 4 does not have always to be kept in operation so that the functionality of the machine is completely adjustable with the simple switching of one or both the units, but by switching on the boiler a preheating of the water can be obtained and consequently it takes a shorter time for the temperature of the water to be raised to that desired for making the coffee infusion.

- 7 -

Claims:

1. An expresso coffee machine having a reduced energy consumption, characterised in that it comprises a boiler (4) connectable to a water supply (5) and having main water heating means (10) therein, two separate liquid delivery units (2,3) selectively operable to deliver a coffee infusion, hot water or steam, each liquid delivery unit (2,3) having a respective independent water heater (23, 24) and the boiler (4) further having a heat exchanger (20) connected to the said liquid delivery units (2, 3) and connectable to the water supply (5), and means (30 , 35) for controlling the heating means (10) in the boiler (4) and the independent heating means (23, 24) of the liquid delivery units (2, 3) independently of one another.

2. An expresso coffee machine according to Claim 1, characterised in that each delivery unit (2, 3) has an auxiliary reservoir (21, 22) in which the said independent heating means (23, 24) are positioned.

3. An expresso coffee machine as claimed in Claim 2, characterised in that there are provided an upper limit thermostat (25) and a lower limit thermostat (26) for controlling the temperature range within each of the said auxiliary reservoirs (21, 22) of the liquid delivery units (1, 2).

4. An expresso coffee machine accordint to any preceding Claim, characterised in that there is a further provided a motor driven pump (6, 7) connected in the water supply network (15) of the boiler (4), the said pump (6) being operable selectively to deliver water to the said boiler (4) and to the said heat exchanger (20).

- 8 -

5. An expresso coffee machine according to any preceding Claim, characterised in that each of the said delivery units (1, 2) has a first operating switch (30, 33) for controlling the independent heating means (23, 24) a second operating switch (31, 35) for controlling delivery of an infusion of coffee, and a third operating switch (32, 35) for controlling the delivery of hot water or steam.

6. An expresso coffee machine according to any preceding Claim, characterised in that there is further provided a switch (50) for controlling the operation of the said main heating means (10) in the boiler.

7. An expresso coffee machine according to any preceding Claim, characterised in that the said boiler (4) is provided with an automatic level sensor (12) for detecting the level of liquid therein.

0201656

Fig. 1

Fig. 2

| | DOCUMENTS CONSIDERED TO BE RELEVANT | | EP 85830305.0 |
|---|---|---|---|
| **Category** | **Citation of document with indication, where appropriate, of relevant passages** | **Relevant to claim** | **CLASSIFICATION OF THE APPLICATION (Int. Cl.4)** |
| X | US - A - 2 490 501 (R.C.ASHENDEN, JR.) | 1 | A 47 J 31/24 |
| A | .* Totality * | 2 | |
| | -- | | |
| Y | AT - E - 8 200 (NUOVA FAEMA S.P.A.) | 1 | |
| | * Totality * | | |
| | ---- | | |

**TECHNICAL FIELDS SEARCHED (Int. Cl.4)**

A 47 J 31/00

The present search report has been drawn up for all claims

| Place of search | Date of completion of the search | Examiner |
|---|---|---|
| VIENNA | 01-09-1986 | BEHMER |